# EUROPEAN PATENT APPLICATION

(11) **EP 3 599 056 A1**
(43) Date of publication of application: **29.01.2020**
(21) Application number: 18185745.9
(22) Date of filing: 26.07.2018
(51) Int. Cl.: B25B 23/14, F16B 39/22, G01L 5/24

(54) **METHOD FOR RATING A SCREW WHICH IS PURPORTEDLY EMBEDDED IN GROUT**

(71) Applicant: Hilti Aktiengesellschaft, 9494 Schaan (LI)
(72) Inventor: Pol, Frederic, 6800 Feldkirch (AT); Jimenez, Cristian, 9000 Sankt Gallen (CH); Ziltener, Michael, 8854 Siebnen (CH); Schneider, Roland, 6824 Schlins (AT); Claus, Alexander, 6800 Feldkirch (AT)
(74) Representative: Hilti Aktiengesellschaft Corporate Intellectual Property

(57) **Abstract**

The invention relates to a method for rating a screw, which is located in a hole in a concrete or masonry substrate, and which is purportedly embedded in grout, in which:
- screw torque is applied to the screw,
- motion data of the screw in response to the screw torque applied to the screw is measured, and
- on the basis of the measured motion data, the screw is alternatively rated as "satisfactory" or as "unsatisfactory".

## Description

The invention relates to a method for rating a screw, which is located in a hole in a concrete or masonry substrate, and which is purportedly embedded in grout, according to claim 1.

EP0955476 B2 discloses a fixing arrangement in a concrete substrate, including a tapping screw arranged in a hole, wherein the hole is so filled with a hardenable grout that an annular gap between the wall of the hole and the screw is completely filled with the grout and, when the grout has hardened, the thread of the screw is embedded partly in the substrate and partly in the shell of grout.

US2010247267 A1 proposes specific concrete screw shaft diameters, in relation to the diameter of the drill for making the hole in which the screw is to be placed. A grout can be optionally used.

WO17025318 A1 describes a method for installing a concrete screw in concrete, in which a preliminary tread is cut in a first step and subsequently, the concrete screw is screwed into this preliminary thread, thereby widening the preliminary thread.

US5730557 A describes a mortar mixture unit for chemical attachment of anchors in holes, which includes an essentially cylindrical container, which can be ruptured when inserting the anchor into the hole.

US2017138390 A1 discloses a system for dispensing hardenable grout when a screw is screwed into a concrete hole.

DE102011003127A1 describes a glass cartridge containing a hardenable grout, wherein the glass cartridge is provided with a mechanical holding part, which is designed as a retaining spring. The cartridge is placed in a borehole and a screw is subsequently screwed in, thereby opening the cartridge.

It is an object of the invention to make available a method which provides, whilst being particularly easy to implement, particularly reliable performance of the screw at particularly low effort.

This object is achieved by a method according to claim 1. Dependent claims refer to preferred embodiments of the invention.

The invention provides a method for rating a screw, which screw is located in a hole in a concrete or masonry substrate, and which screw is purportedly embedded in grout, in which:
- screw torque x is applied to the screw,
- motion data of the screw in response to the screw torque τ applied to the screw is measured, and
- on the basis of the measured motion data, the screw is alternatively rated as "satisfactory" or as "unsatisfactory".

Thus, in an inventive method, screw torque is applied to the screw, and in a decision process that considers the resulting rotation behaviour the screw, the screw is either ranked "satisfactory" or "unsatisfactory".

When a screw, in particular a tapping screw, is to be embedded in a grout shell, there is a possibility that the step of placing grout in the hole is inadvertently omitted, with potentially unfavourable consequences on screw performance in some situations. However, since a screw can often bear significant loads even when the intended grout shell is absent, such an omission might be overlooked in some situations. Based on this finding, the invention has recognized that there can be a need for a method for rating a screw purportedly embedded in grout, in particular for rating it as "satisfactory" if the grout embedment is present or "unsatisfactory" if the grout embedment is missing. Another aspect of the invention is based on the surprising finding that the screw torque required for loosening the screw can be significantly dependent on the presence or absence, respectively, of the grout embedment. In particular, loosening moment can be significantly higher if grout embedment is present. For a 14mm sized concrete screw, it was for example found that loosening torque τ_{grout+} was about 100Nm when a certain grout liner was present, whereas loosening torque τ_{grout-} was less than 5Nm if grout embedment was absent. The invention proposes to exploit this finding and to use loosening torque-based measurements for distinguishing grout shell presence or absence, respectively, and for rating the screw on this basis. In particular, predetermined screw torque is applied to the screw and motion data of the screw is acquired in order to assess if the screw has become loose. This allows a particular easy-to-perform, reliable and also non-destructive rating process. By and large, the inventive rating method, whilst being easy to implement, allows particularly reliable performance of the screw at particularly low effort.

The screw is preferably a tapping screw, in particular a tapping screw with respect to the substrate, i.e. it is able to form, in particular to cut, a mating thread in the substrate. The hole can preferably be a blind hole. The screw is, in particular with its shaft and more particular with its tip, located in the hole. In particular, the screw is threadedly engaged with the substrate, in particular at the wall of the hole, i.e. the screw has a thread which is arranged in a mating thread in the substrate, in particular in the wall of the hole. Advantageously, the mating thread is a mating thread tapped at least partly by the screw itself.

The substrate in which the hole is provided comprises concrete or masonry. In environments like these, the described gap between τ_{grout+} and τ_{grout-} was observed. The grout comprises a hardenable mass and can for example be epoxy-based or cement-based. The grout can preferably be a mortar.

Screw torque can be preferably applied to the screw by grasping the screw, favourably at a head of the screw. Motion data of the screw is measured in response to the screw torque applied to the screw, which can imply that screw motion that occurs as a consequence of applying the screw torque is monitored.

The torque applied to the screw is screw torque, i.e. torque that is so directed that it can screwingly move the screw. In particular, the screw torque is directed around the longitudinal axis of the screw. In particular, the motion data of the screw relates to rotational movement around the longitudinal axis of the screw, i.e. the motion data of the screw is data of screw rotation around the longitudinal axis.

Motion data of the screw could for example be the angle of displacement of the screw or the speed of rotation of the screw. However, it is particularly preferred if motion data contains merely a two-state differentiation if the screw has moved or not, in particular if it has rotated or not, i.e. the motion data can simply be a Boolean-type variable stating if loosening movement has occurred or not. This can further facilitate the method.

Motion data can for example be measured with a measurement device. In a particularly simple but nevertheless reliable embodiment, motion data of the screw can also be measured by a human watching the screw or by a human sensing movement of the screw.

According to the invention, there is a rating process, which uses at least motion data and preferably also data relating to the applied screw torque as a decision basis for rating the screw either as "satisfactory" or as "unsatisfactory". Thus, the rating is based at least on the measured motion data. Optionally, the rating can also be based on the screw torque that is applied to the screw. Preferably, the screw torque that is applied to the screw is also measured. In particular, a "satisfactory" rating is indicative of grout embedment being present and an "unsatisfactory" rating is indicative of grout embedment being at least partly absent.

According to a preferred embodiment, screw torque is applied to the screw in the unscrewing direction of the screw, i.e. in that direction of rotation that causes the screw to withdraw from the hole, i.e. in the direction that is opposite to the fastening direction of the screw. Thus, predetermined unscrewing torque is applied on the screw and unscrewing motion data is acquired. This can further facilitate the method, in particular since screw rotation in the unscrewing direction is often well accessible even when the screw is completely installed.

It is possible to ramp up the screw torque until the screw becomes loose, to determine the screw torque value at which the screw becomes loose, and to carry out the inventive rating on the basis of weather the loosening torque τ_{grout+} for a grouted hole has been reached or not. This, however, means that the screw is moved even when it is perfectly grouted, potentially making additional re-installation steps necessary.

Particularly in view of this, it is preferred if the screw torque τ applied to the screw is ramped up to a predetermined maximum measurement value τₘₐₓ only, and the screw is rated as "unsatisfactory" if the screw becomes loose in response to the screw torque τ before the screw torque τ reaches the maximum measurement value τₘₐₓ, and "satisfactory" if the screw does not become loose in response to the screw torque τ before the screw torque τ reaches the maximum measurement value τₘₐₓ, wherein, preferably, the maximum measurement value τₘₐₓ is between the loosening torque τ_{grout+} of the screw embedded in grout and the loosening torque τ_{grout-} of the screw not embedded in grout. This embodiment of the invention is based on the surprising finding that the above-mentioned correlation between loosening torque and presence of grout permits to define a rating method that does not affect the integrity of the screw connection when the screw has been correctly installed, i.e. when a grout shell is present: Between the relatively high loosening torque for a grouted screw τ_{grout+} and the relatively low loosening torque for a non-grouted screw τ_{grout-}, there is a torque band, in which only non-grouted screws will become loose. On this basis, the embodiment proposes to choose a predetermined maximum measurement value τₘₐₓ within this band, and to ramp the screw torque τ up to this predetermined maximum measurement value τₘₐₓ only, i.e. to ramp it up not higher than the predetermined maximum measurement value τₘₐₓ. If the screw becomes loose under these conditions, i.e. if it commences screwing motion, this indicates lack-of-grout, and consequently "unsatisfactory" rating, whereas if it remains essentially stationary and does not become loose, this indicates presence-of-grout, and consequently "satisfactory" rating. Since the screw torque τ applied to the screw always remains below the relatively high loosening torque for a grouted screw τ_{grout-}, an as-intendedly installed screw will not be moved, and therefore, no re-installation is required in the "as-intended" cases.

It can be possible to choose the maximum measurement value τₘₐₓ to be equal to the loosening torque of the screw not embedded in grout τ_{graut-}, i.e. to choose τₘₐₓ = τ_{graut-}. However, in view of the relatively large variance of the parameters involved, it is preferred if the maximum measurement value τₘₐₓ is chosen deep within the band between τ_{grout+} and τ_{graut-}, in order to improve reliability in view of variance. In particular, it is preferred if τₘₐₓ also has some distance from τ_{grout+}, in order to prevent unintentional loosening of a grouted screw due to parameter variance. Since τ_{grout}+ and τ_{grout-} can often differ by an order of magnitude or more, choosing τₘₐₓ at with a distance to both τ_{grout+} and τ_{grout-} can often be easily achieved.

Ramping-up can be linearly or non-linearly, continuously or discontinuously. Ramping-up can be a one-time event, or there can be repeated ramping up, in particular in the form of steep pulses, for example created by an impact wrench, which might provide better detectability of the screw becoming loose.

Ramping up the screw torque τ applied to the screw can be aborted if the screw becomes loose in response to the screw torque τ before the screw torque τ reaches the maximum measurement value τₘₐₓ. In other words, it can be provided that τ is kept below τₘₐₓ and is in particularly brought back to zero once the screw starts rotating. This can further facilitate the method, in particular if a torque wrench is used, without compromising results.

As already mentioned above, screw torque τ can advantageously be applied to the screw using a torque wrench. A torque wrench allows to carry out the method in a particularly easy and versatile manner. In particular, the torque wrench can be set to the maximum measurement value τₘₐₓ. In this case, the natural mode of operation of the torque wrench can easily be used for ramping up to the maximum measurement value, but not above.

Alternatively, screw torque could be applied to the screw using a powered impact wrench, preferably an electrically powered impact wrench, in particular a cordless impact wrench. In this case, a series of torque pulses can be applied, i.e. the torque is repeatedly ramped up, which can allow particular easy detectability of motion of the screw. Limiting torque applied to the screw to the maximum measurement value τₘₐₓ can in this case be provided by the layout design of the torque wrench.

As already mentioned above, the screw can have a head, for example a hex-head. The inventive method can be particularly useful in case of headed screws, since a screw head often impedes a visual inspection for the presence or absence of grout. In particular, the screw has a shaft, with a thread being provided on the shaft. If present, the head can preferably be located at the rearward end of the shaft, opposite the tip of the shaft.

The ratio of the diameter of the thread of the screw to the pitch of the thread of the screw can be between 1 and 2, especially between 1.2 and 1.45. These are typical thread dimensions for screws that are intended for tapping insertion in concrete or masonry substrates. In particular, and in line with the usual definition, the pitch can be understood to be the axial distance between successive turns of a thread flight.

The invention also relates to a method for installing a screw in a hole in a concrete or masonry substrate, in which grout is placed in the hole, subsequently, the screw is screwed, tappingly, into the hole, and subsequently, the inventive method for rating a screw is used on the screw. Thus, the method for rating a screw is performed after the screw has been installed in a mineral substrate.

Features that are described here in connection with the inventive method for installing a screw can also be used in connection with the inventive method for rating a screw and features that are described here in connection with the inventive method for rating a screw can also be used in connection with the inventive method for installing a screw.

The invention is explained in greater detail below with reference to preferred exemplary embodiments, which are depicted schematically in the accompanying drawings, wherein individual features of the exemplary embodiments presented below can be implemented either individually or in any combination within the scope of the present invention.
- Figures 1 to 5:: consecutive steps of an example of a method for installing a screw in a hole in a mineral substrate, including a first example of a method for rating the screw, the setup for this rating method being shown in figure 5;
- Figures 6 and 7: exemplary parameters obtained in a method for rating a screw; and
- Figure 8:: the setup for an alternative embodiment of a method for rating a screw.

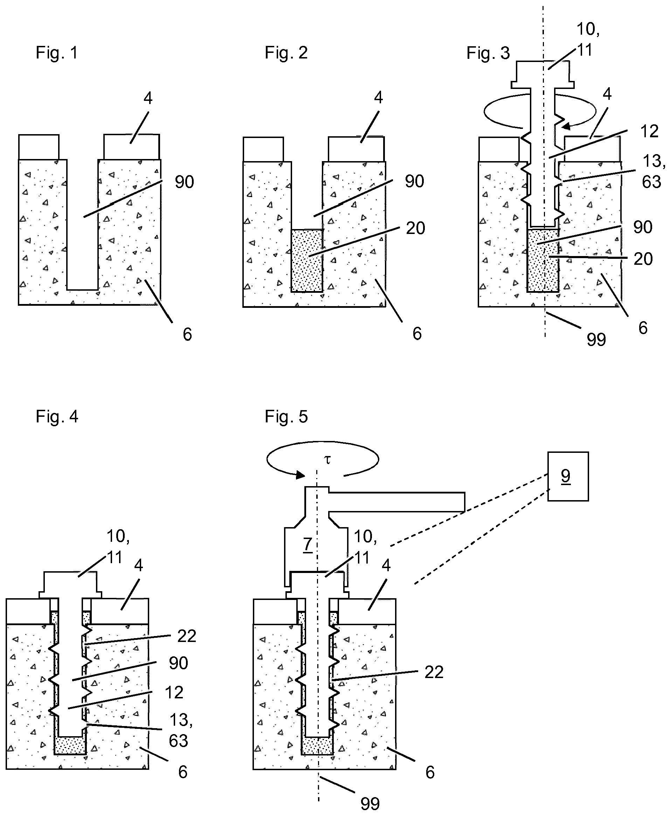

Figures 1 to 5 show, in side view, consecutive steps of an example of a method for installing a screw in a hole in a mineral substrate, including a first method for rating the screw.

First, and as shown in figure 1, a hole 90 is provided in a substrate 6. The substrate 6 is preferably a concrete substrate, and the hole 90 can be a blind hole, that can for example be provided by drilling.

Subsequently, and as shown in figure 2, a quantity of hardenable grout 20 is placed in the hole 90. This can for example be done by injecting the grout into the hole 90 using a dispenser or by placing a cartridge containing the hardenable grout 20 in the hole 90. If a cartridge is used, the hardenable grout 20 can be a two component hardenable grout. In particular, the hardenable grout 20 can be a mortar.

An attachment part 4 is arranged at the surface of the substrate 6 surrounding the hole 90, so that an opening in the attachment part 4 is aligned with the hole 90. This can be done after placing, during placing or, as shown by way of example here, before placing the hardenable grout 20 in the hole 90.

As shown in figure 3, a screw 10 is then provided, which has a shaft 12 defining a longitudinal axis 99 and a thread 13 arranged on the shaft 12 and helically surrounding the shaft 12 and the longitudinal axis 99. The screw 10 is a tapping screw, which means that the screw 10, in particular its thread 13, is able to cut the substrate 6 and to form a mating thread 63 in the substrate 6. The screw 10 has a drive for imparting screw torque on the screw 10. In the present case, the drive is a head 11, in particular a hex-head.

The screw 10 is screwed into the hole 90, around the longitudinal axis 99, and in this connection, the thread 13 of the screw 10 forms a mating thread 63 in the substrate 6 in the wall of the hole 90.

As the screw 10 is lowered into the hole 90, it displaces hardenable grout 20, causing hardenable grout 20 to flow alongside the shaft 12 of the screw 10 towards the mouth of the hole 90. The hardenable grout 20 forms a liner 22 there, covering the wall of the hole 90. The screw 10 is screwed into the hole 90 until the head 11 of the screw 10, directly or via for example a washer, abuts on the attachment part 4, resulting in the configuration shown in figure 4.

The hardenable grout 20 of the liner 22 hardens and the liner 22 made up of the hardened grout 20 can improve performance of the screw 10. It is therefore of interest if the liner 22 is present as intended. However, since the head 11 of the screw 10 covers the hole 90 in the substrate 6, presence of the liner 22 cannot be easily determined visually. A dedicated method for rating the screw 10 either "satisfactory" or "unsatisfactory" is therefore employed.

In this method, which is indicated in figure 5, screw torque τ is applied on screw 10, in particular on the head 11 of the screw 10, the screw torque τ being directed around the longitudinal axis 99 and, preferably, in the unscrewing direction of the screw 10. In the embodiment shown in figure 5, screw torque τ is applied using a torque wrench 7.

The torque τ applied on screw 10 is ramped up, i.e. increased, but only to a predetermined maximum measurement value τₘₐₓ, not any higher. Limiting the applied screw torque τ to the maximum measurement value τₘₐₓ can be achieved by setting the maximum measurement value τₘₐₓ on the torque wrench 7. The maximum measurement value τₘₐₓ is chosen between a loosening torque τ_{grout+} of the screw 10 embedded in a grout liner 22 and a loosening torque τ_{grout-} of the screw 10 not embedded in a grout liner 22.

Motion data of the screw 10 in response to the screw torque τ applied to the screw 10 - for example the angular position α of the screw or the mere presence or absence of rotational movement - is measured using a sensor 9, which sensor 9 can be, in a particularly easy-to-perform embodiment, also the naked eye that watches movement of the screw 10 or the body of an installer that senses movement of the screw 10.

Based on the motion data of the screw 10, the screw 10 is either rated "satisfactory", namely when the screw 10 does not become loose despite the screw torque τ being increased to the maximum measurement value τₘₐₓ, or it is rated "unsatisfactory", namely when screw 10 becomes loose and starts screwing, in particular unscrewing, before the screw torque τ reaches the maximum measurement value τₘₐₓ.

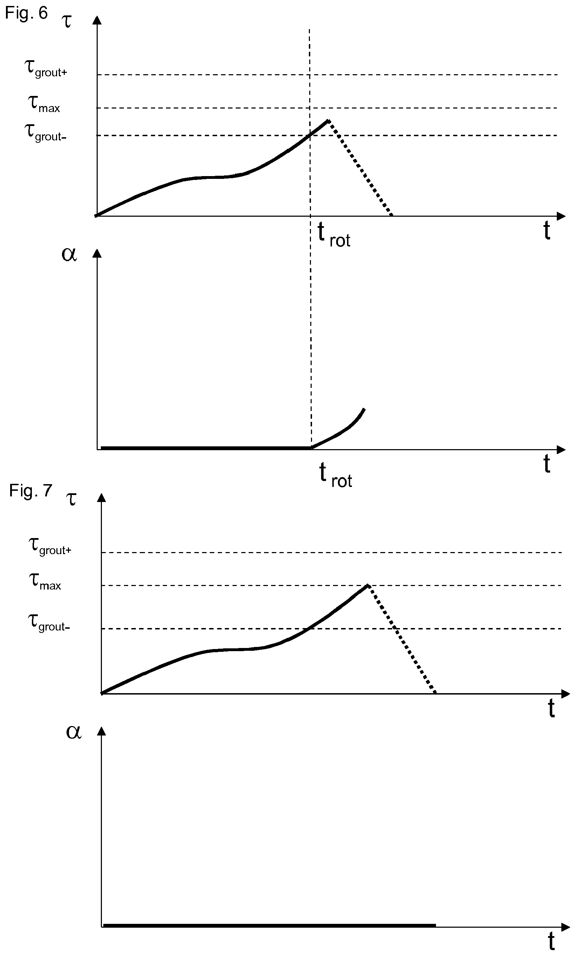

Figure 6 shows a first set of exemplary parameters obtained in the rating method. The top chart of figure 6 shows the screw torque τ that is applied on the screw 10 versus time t, and the bottom chart shows the angular position α of the screw 10 with respect to the substrate 6 versus time t.

The top chart of figure 6 shows that the maximum measurement value τₘₐₓ is chosen to be within the band between the loosening torque τ_{grout+} of the screw 10 embedded in hardened grout 20 and the loosening torque τ_{grout-} of the screw 10 not embedded in hardened grout 20.

As shown in the top chart of figure 6, screw torque τ applied on the screw 10 is increased with time, towards the maximum measurement value τₘₐₓ. By way of example, screw torque τ is increased in a non-linear manner here. Figure 6 illustrates an example in which the grout embedment of the screw 10 is absent. Therefore, once the screw torque τ applied on the screw 10 reaches the loosening torque τ_{grout-} of the screw 10 not embedded in grout 20, which happens at t = tᵣₒₜ here, the screw 10 becomes loose and starts rotating, and the angular position α of the screw 10 around its longitudinal axis 99 changes, as shown in the bottom chart of figure 6. This rotation is sensed by sensor 9. After the screw has become loose, increasing the screw torque τ applied on the screw 10 towards the maximum measurement value τₘₐₓ is aborted, for example by not turning the torque wrench 7 further, and the screw 10 is ranked "unsatisfactory".

Figure 7 shows a second set of exemplary parameters obtained in the rating method, the charts being analogous to those of figure 6. In case of figure 7, however, the screw 10 is embedded in grout 20 as intended. Therefore, screw torque τ applied on the screw 10 is ramped up all the way up to the maximum measurement value τₘₐₓ, but the screw 10 does not become loose, i.e. the angular position α of the screw 10 does not significantly change (only negligible changes due to elastic effects take place). Based on this finding, the screw 10 is ranked "satisfactory".

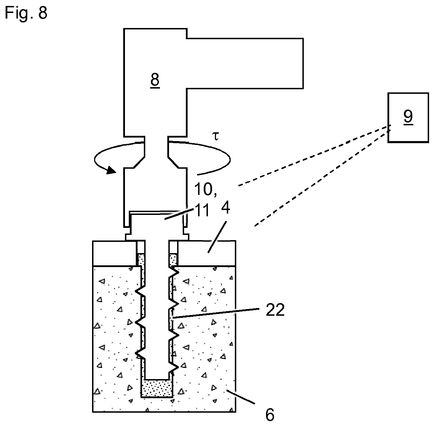

Figure 8 shows an alternative embodiment of a method for rating the screw 10 either "satisfactory" or "unsatisfactory". In contrast to the embodiment of figure 5, where a torque wrench 7 is used for applying torque τ on the screw 10, the embodiment of figure 8 uses a powered, particularly electrically powered, preferably cordless impact wrench 8 for this purpose. According to the embodiment of figure 8, torque τ applied on the screw 10 is a series of pulses, and limiting the applied screw torque τ to the maximum measurement value τₘₐₓ can be achieved by appropriate design of the impact wrench 8. Beyond that, the description of the method illustrated in figure 5 applies mutatis mutandis. In particular, the method shown in figure 8 can be used in connection with the steps shown in figures 1 to 4, and in replacement of the method shown in figure 5.

## Claims

1. Method for rating a screw (10), which is located in a hole (90) in a concrete or masonry substrate (6), and which is purportedly embedded in grout (20), in which:
- screw torque (τ) is applied to the screw (10),
- motion data of the screw (10) in response to the screw torque (τ) applied to the screw (10) is measured, and
- on the basis of the measured motion data, the screw (10) is alternatively rated as "satisfactory" or as "unsatisfactory".

2. Method according to claim 1,
**characterized in that**
screw torque (τ) is applied to the screw (10) in the unscrewing direction of the screw (10).

3. Method according to any of the preceding claims,
**characterized in that**
the screw torque (τ) applied to the screw (10) is ramped up to a predetermined maximum measurement value (τₘₐₓ) only, and the screw (10) is rated as "unsatisfactory" if the screw (10) becomes loose in response to the screw torque (τ) before the screw torque (τ) reaches the maximum measurement value (τₘₐₓ), and "satisfactory" if the screw (10) does not become loose in response to the screw torque (τ) before the screw torque (τ) reaches the maximum measurement value (τₘₐₓ).

4. Method according to claim 3,
**characterized in that**
the maximum measurement value (τₘₐₓ) is between a loosening torque (τ_{grout+}) of the screw (10) embedded in grout and a loosening torque (τ_{graut-}) of the screw (10) not embedded in grout.

5. Method according to any of claims 3 or 4,
**characterized in that**
ramping up the screw torque (τ) applied to the screw (10) is aborted if the screw (10) becomes loose in response to the screw torque (τ) before the screw torque (τ) reaches the maximum measurement value (τₘₐₓ).

6. Method according to any of the preceding claims,
**characterized in that**
screw torque (τ) is applied to the screw (10) using a torque wrench (7).

7. Method according to any of claims 3 to 5 and according to claim 6,
**characterized in that**
the torque wrench (7) is set to the maximum measurement value (τₘₐₓ).

8. Method according to any of claims 1 to 5,
**characterized in that**
screw torque (τ) is applied to the screw (10) using a powered impact wrench (8).

9. Method according to any of the preceding claims,
**characterized in that**
the screw (10) has a head (11).

10. Method according to any of the preceding claims,
**characterized in that**
the ratio of the diameter of the thread (13) of the screw (10) to the pitch of the thread (13) of the screw (10) is between 1 and 2.

11. Method for installing a screw (10) in a hole (90) in a concrete or masonry substrate (6), in which
grout (20) is placed in the hole (90),
subsequently, the screw (10) is screwed, tappingly, into the hole (90), and subsequently, the method for rating a screw (10) according to any one of the preceding claims is used on the screw (10).
